# EUROPÄISCHE PATENTSCHRIFT

(11) **EP 1 000 805 B1**
(45) Veröffentlichungstag und Bekanntmachung des Hinweises auf die Patenterteilung: **08.03.2006**
(21) Anmeldenummer: 99120886.9
(22) Anmeldetag: 27.10.1999
(51) Int. Cl.: B60Q 1/26

(54) **Gekrümmte Signalleuchte für ein Fahrzeug**
Curved signaling light for vehicle
Feu de signalisation courbé pour véhicule

(30) Priorität: 12.11.1998 DE 19852308
(43) Veröffentlichungstag der Anmeldung: 17.05.2000
(73) Patentinhaber: Volkswagen Aktiengesellschaft, 38436 Wolfsburg (DE)
(72) Erfinder: Falz, Frank, 38444 Wolfsburg (DE); Müller, Michael, 38518 Gifhorn (DE)

(56) Entgegenhaltungen:
- EP-A- 0 633 163
- WO-A-98/22748
- FR-A- 2 580 377

## Beschreibung

Die Erfindung betrifft eine gekrümmte Signalleuchte für ein Fahrzeug mit einer Vielzahl von in Reihe und/oder Spalten angeordneten Lichtquellen und einem diesen zugeordneten Kollimationselement, insbesondere zur Anordnung in den Eckbereichen des Hecks eines Personenkraftfahrzeuges.

Gekrümmte Signalleuchten sind hinsichtlich einer optimalen Ausleuchtung des diese nach außen hin abschließenden Leuchtenglases problematischer als ebene Signalleuchten und man geht deshalb und auch aus energetischen Gründen verstärkt dazu über, statt einer einzigen Glüh- oder Leuchtstofflampe eine Vielzahl von Lichtquellen mit geringer Energieaufnahme einzusetzen. Dazu ist ein dreidimensionales Anordnungsraster geboten, für das ein entsprechender Lichtquellenträger und den Lichtquellen zugeordnete optische Mittel zur Optimierung der Ausleuchtung erforderlich sind. Die Leuchten haben auch den Vorteil, daß sie wesentlich flacher ausgebildet werden können.

In der EP 0 633163 A1 wird dazu vorgeschlagen, die Lichtquellen im Krümmungsbereich im wesentlichen radial zur Krümmung und im Abstand zueinander anzuordnen und jeder Lichtquelle eine Fresnel-Linse zur Parallelausrichtung der Strahlen zuzuordnen, wobei die einzelne Lichtquelle in der Achse der dieser zugeordneten Fresnel-Linse liegt und alle Fresnel-Linsen im gleichen Abstand zur Lichtquelle angeordnet sind. Im Krümmungsbereich ergibt sich durch die radiale Anordnung eine geringere Ausleuchtung als in dem Bereich, in dem die Fresnel-Linsen achsparallel angeordnet sind, da die durch diese Linsen ausgesendeten parallelgerichteten Lichtstrahlenbündel divergieren und sich größere Zwickelbereiche zwischen diesen ergeben.

Aus der EP 0 531 184 B1 in Verbindung mit der EP 0 531 185 B1 ist es bekannt, eine Signalleuchte mit einem Trägerelement für eine Vielzahl von Lichtquellen auszurüsten, das streifenförmig geteilt ist, wobei die Streifen mit einer Reihe von Lichtquellen besetzt sind und jeder Streifen einer anderen Krümmung folgen kann. Dieses Trägerelement ist mit einem Kollimationselement verbunden, das trägerelementeseitig stufenförmig ausgebildet ist und durchgehende und parallel zueinander ausgerichtete, insbesondere trichterförmige Öffnungen aufweist, die jeweils einer Lichtquelle zugeordnet sind. Dabei sind die Öffnungen auch im Krümmungsbereich in Fahrzeuglängsrichtung achsparallel ausgerichtet, jedoch stufenförmig zueinander versetzt angeordnet, und der der jeweiligen Lichtquelle abgewandte Öffnungsbereich ist durch das gekrümmte bzw. auch nur schräg zur Fahrzeuglängsachse ausgebildete Kollimationselement auch bei einem Blick auf die Fahrzeugseite zu sehen. Die Lichtabstrahlung erfolgt trichterförmig in paralleler Ausrichtung der Achsen der Strahlenbündel. Dabei kann es zu Überlagerungen von Lichtstrahlen im Bereich des vorgelagerten Leuchtenglases kommen, wodurch eine gleichmäßige und harmonische Ausleuchtung desselben in der vorbestimmten Lichtabstrahlrichtung gestört wird.

Es ist Aufgabe der Erfindung, eine gekrümmte Signalleuchte für ein Fahrzeug nach dem Oberbegriff des Anspruchs 1 zu schaffen, bei der die Ausleuchtung des Leuchtenglases in der vorbestimmten Lichtabstrahlrichtung gleichmäßig und harmonisch ist.

Diese Aufgabe wird bei einer gekrümmten Signalleuchte nach dem Oberbegriff des Anspruchs 1 durch dessen kennzeichnende Merkmale gelöst.

Die Erfindung besteht in einer gekrümmten Signalleuchte mit einer Vielzahl von in Reihen und Spalten achsparallel und in Fahrzeuglängsrichtung stufenförmig versetzt angeordneten Lichtquellen, denen ein aus einer Vielzahl von stufenförmig versetzt angeordneten Fresnel-Linsen gebildetes Kollimationselement zugeordnet ist. Dabei ist jeder Lichtquelle eine Fresnel-Linse zugeordnet ist, deren Achse in der Achse der Lichtquelle und deren Brennpunkt in der Lichtquelle liegt, so daß auch der Abstand der Fresnel-Linsen zu den Lichtquellen im wesentlichen gleich ist. Die Lichtquellen sind an einem in Reihen und Spalten stufenförmig ausgebildeten Trägerelement angeordnet, das ein dreidimensionales Anordnungsraster ausbildet, das mit der Leuchtenglasform und damit auch mit der Karosserieform des jeweiligen Fahrzeugtyps korrespondiert. An diesem Trägerelement kann für jede Lichtquelle ein separater Sockel vorgesehen sein.

Bei diesen Signalleuchten werden Überlagerungen von Lichtstrahlen benachbarter Lichtquellen in der vorbestimmten Abstrahlrichtung vermieden, da die einzelnen Lichtstrahlen parallel zueinander ausgerichtet sind. Die Ausleuchtung des Leuchtenglases ist gleichmäßig, so daß das Signallicht harmonisch ausgesendet wird.

Dabei können die Lichtquellen Halbleiter-Lichtquellen, z. B. Lumineszenzdioden sein. Diesen sind Reflektoren zugeordnet, die das erzeugte Licht auf die vorgelagerte Fresnel-Linse werfen. Alternativ dazu können auch Wedge-base-Lampen eingesetzt werden. Da die Wedge-base-Lampen keine integrierten Reflektoren haben, werden bei diesen Lampen Reflektoren gesondert angeordnet.

Dabei können diese Reflektoren zu einer einstückigen Reflektoreneinheit zusammengefaßt sein, die zudem noch mit dem Kollimationselement und dem Leuchtenglas zu einer Montageeinheit zusammengefaßt werden kann, die dann an dem mit den Wedge-base-Lampen bestückten Trägerelement in einem Arbeitsgang angeordnet werden kann.

Die stufenförmige Anordnung der das Kollimationselement bildenden Fresnel-Linsen führt zur Ausbildung von parallel zu deren Achsen angeordneten Seitenwandbereichen zwischen den Fresnel-Linsen, durch die Streulicht nach außen tritt, das insbesondere an der Fahrzeugseite wahrgenommen werden kann. Das Kollimationselement kann auch kotflügelseitig neben der äußeren Lichtquelle einen verlängerten gekrümmten Endbereich aufweisen, der an die Form der Leuchtenscheibe angepaßt ist. Dieser Bereich wird ebenfalls durch Streulicht mehr oder weniger ausgeleuchtet und dient, wie die Seitenwandbereiche, dem seitlichen Abstrahlen von Signallicht, was von Vorteil bei Einsatz der Signalleuchte als Blinkleuchte ist.

Die Erfindung wird nachstehend anhand eines Ausführungsbeispiels erläutert. In der zugehörigen Zeichnung zeigen:
- Fig. 1:: einen Horizontalschnitt durch eine seitliche Blinkleuchte eines Personenkraftwagens, und
- Fig. 2:: einen Ausschnitt aus einer Sicht auf das Kollimationselement.

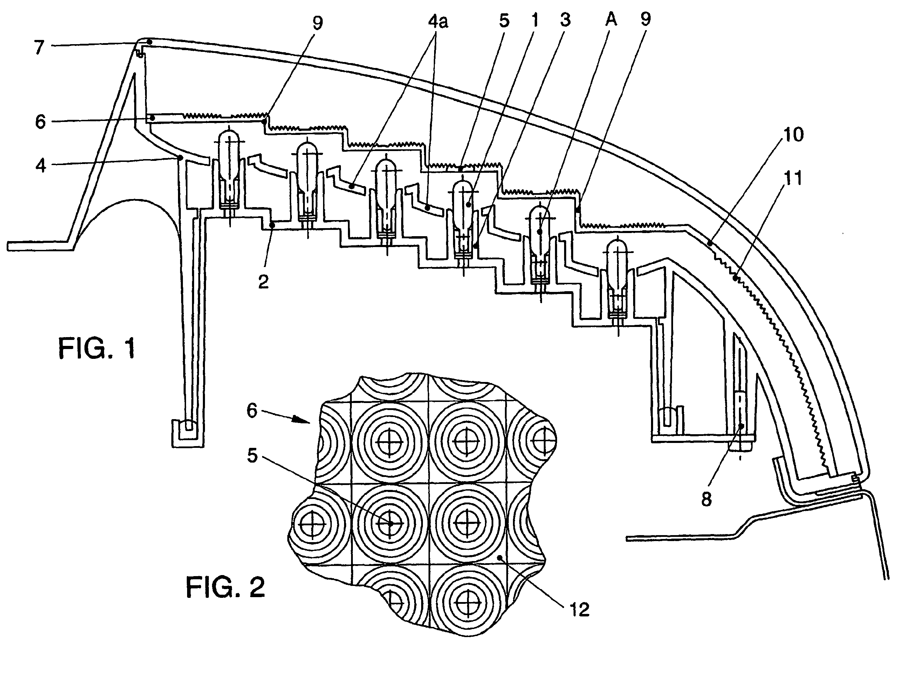

Fig. 1 zeigt eine Reihe achsparallel und in Richtung der Längsachse eines Personenkraftwagens stufenförmig versetzt angeordneter Wedge-base-Lampen 1, die auf einem stufenförmig ausgebildeten Trägerelement 2 angeordnet sind. Für jede Lampe 1 ist ein Sockel 3 vorgesehen, der elektrisch über einen Blinkgeber mit einer nicht dargestellten Stromquelle verbunden ist, wobei diese die Sockel und die Lampen bei eingeschaltetem Blinklicht in vorbestimmten Intervallen speist. An diesem Trägerelement 2 ist eine aus einer einstückigen Reflektoreinheit 4, durch die jeder Lampe 1 ein Reflektor 4a zugeordnet ist, einem Fresnel-Linsen 5 aufweisenden Kollimationselement 6 und einem Leuchtenglas 7 gebildete Montageeinheit angeordnet und mit dem Trägerelement 2 durch eine Befestigungsschraube 8 fest verbunden. Jeder Lampe 1 ist eine Fresnel-Linse 5 zugeordnet, wobei die Achsen A der jeweiligen Lampe 1 und der Fresnel-Linsen 5 überlagert sind, also die Achse der Fresnel-Linse 5 mit der der Lampe 1 zusammenfällt, und die Fresnel-Linsen im gleichen Abstand zum jeweiligen Sockel 3 angeordnet sind, so daß sich eine stufenförmige Anordnung der Fresnel-Linsen 5 ergibt. Die senkrecht zu den Achsen A derselben durch deren stufenweise Anordnung ausgebildeten Bereiche 9 des Kollimationselementes 6 sind nicht strukturiert. Ein an der Kotflügelseite des Kollimationselementes 6 neben der äußeren Lichtquelle ausgebildeter gekrümmter Endbereich 10 ist lichtquellenseitig mit Prismen 11 versehen, die von dieser ausgesendetes und in den Endbereich geleitetes Licht seitlich nach außen abstrahlen.

In Fig. 2 ist das Kollimationselement 6 in einer Sicht auf das Fahrzeugheck dargestellt. Dabei sind die Fresnel-Linsen 5 in Quadraten angeordnet. In den Zwickeln 12 der Linsen 5 wird das Licht nicht parallel ausgestrahlt. Doch das dort entstehende Streulicht führt zu keiner nennenswerten Beeinträchtigung des gebündelten Lichtes, da der Anteil am Gesamtlicht gering ist. Die Ringzonen der Fresnel-Linsen 5 sind in einer untereinander gleichen Dicke ausgeführt, und der Brennpunkt der einzelnen Fresnel-Unsen liegt in der Lichtquelle. Die Lichtstrahlen werden dadurch parallel zur Fahrzeuglängsrichtung ausgesendet, ohne daß sie sich gegenseitig beeinträchtigen, so daß eine im wesentlichen gleichmäßige Ausstrahlung über die gesamte gestufte Fläche der Kollimationselementes 6 erfolgt.

### BEZUGSZEICHENLISTE

- 1: Wedge-base-Lampe
- 2: Trägerelement
- 3: Sockel
- 4: Reflekoreinheit
- 4a: Reflektor
- 5: Fresnel-Linse
- 6: Kollisionselement
- 7: Leuchtenglas
- 8: Befestigungsschraube
- 9: Bereich
- 10: Endbereich
- 11: Prisma
- 12: Zwickel
- A: Achse

## Patentansprüche

1. Gekrümmte Signalleuchte für ein Fahrzeug mit einer Vielzahl von in Reihen achsparallel und in Fahrzeuglängsrichtung stufenförmig versetzt angeordneten Lichtquellen sowie einem zwischen den Lichtquellen und einem Leuchtenglas angeordneten Kollimationselement, das aus einer Vielzahl von stufenförmig versetzt angeordneten Fresnel-Linsen (5) gebildet ist, von denen jeder Lichtquelle (1) eine Fresnel-Linse (5) achsüberlagernd zugeordnet ist, deren Brennpunkt mit der Lichtquelle (1) übereinstimmt, **dadurch gekennzeichnet, dass** die Lichtquellen (1) an einem in Reihen und Spalten stufenförmig ausgebildeten Trägerelement (2) angeordnet sind, das ein dreidimensionales Anordnungsraster ausbildet.

2. Signalleuchte nach Anspruch 1, **dadurch gekennzeichnet, dass** an dem Trägerelement (2) für jede Lichtquelle (1) ein separater Sockel (3) ausgebildet ist.

3. Signalleuchte nach Anspruch 1 oder 2, **dadurch gekennzeichnet, dass** die Lichtquellen (1) Wedge-base-Lampen sind.

4. Signalleuchte nach Anspruch 3, **dadurch gekennzeichnet, dass** den Wedge-base-Lampen separate Reflektoren (4a) zugeordnet sind.

5. Signalleuchte nach Anspruch 4, **dadurch gekennzeichnet, dass** sämtliche Reflektoren (4a) als Reflektoreneinheit (4) einstückig ausgebildet sind.

6. Signalleuchte nach Anspruch 5, **dadurch gekennzeichnet, dass** die Reflektoreneinheit (4), das Kollimationselement (6) und das Leuchtenglas (7) zu einer Montageeinheit verbunden sind.

7. Signalleuchte nach Anspruch 1, **dadurch gekennzeichnet, dass** das Kollimationselement (6) kotflügelseitig neben der äußeren Lichtquelle (1) einen gekrümmten und an die Form der Leuchtenscheibe angepaßten Endbereich (10) aufweist, der erheblich länger als die einzelnen Stufen ausgebildet und innenseitig mit Prismen (11) versehen ist.

## Claims

1. Curved signalling lamp for a vehicle, having a multiplicity of light sources arranged in rows in an axially parallel fashion and offset in a step fashion in the vehicle longitudinal direction, and having a collimation element which is arranged between the light sources and a lamp lens and which is formed from a multiplicity of Fresnel lenses (5) arranged offset in a step fashion, of which each light source (1) is assigned in an axially overlapping fashion a Fresnel lens (5) whose focal point coincides with the light source (1), **characterized in that** the light sources (1) are arranged on a carrier element (2) which is designed in a step fashion with rows and columns and forms a three-dimensional raster array.

2. Signalling lamp according to Claim 1, **characterized in that** a separate cap (3) is formed for each light source (1) on the carrier element (2).

3. Signalling lamp according to Claim 1 or 2, **characterized in that** the light sources (1) are wedge base lamps.

4. Signalling lamp according to Claim 3, **characterized in that** the wedge base lamps are assigned separate reflectors (4a).

5. Signalling lamp according to Claim 4, **characterized in that** all the reflectors (4a) are formed in one piece as a reflector unit (4).

6. Signalling lamp according to Claim 5, **characterized in that** the reflector unit (4), the collimation element (6) and the lamp lens (7) are connected to a mounting unit.

7. Signalling lamp according to Claim 1, **characterized in that** on the mud guard side next to the outer light source (1) the collimation element (6) has a curved end region (10) which is adapted to the shape of the lamp lens and is designed to be substantially longer than the individual steps and is provided on the inside with prisms (11).

## Revendications

1. Feu de signalisation courbé pour un véhicule avec un grand nombre de sources lumineuses disposées de manière décalée en gradins dans le sens longitudinal du véhicule et en rangées à axes parallèles ainsi qu'avec un élément collimateur disposé entre les sources lumineuses et un verre de lampe et qui est constitué par un grand nombre de lentilles de Fresnel (5) disposées de manière décalée en gradins et par lesquelles chaque source lumineuse (1) est associée à une lentille de Fresnel (5) avec superposition des axes, dont le foyer correspond à la source lumineuse (1), **caractérisé en ce que** les sources lumineuses (1) sont placées sur un élément support (2) réalisé en forme de gradins en rangées et en colonnes, ce qui forme une matrice de disposition tridimensionnelle.

2. Feu de signalisation selon la revendication 1, **caractérisé en ce qu'**une douille (3) distincte pour chaque source lumineuse (1) est réalisée sur l'élément support (2).

3. Feu de signalisation selon la revendication 1 ou 2, **caractérisé en ce que** les sources lumineuses (1) sont des lampes à tige de verre.

4. Feu de signalisation selon la revendication 3, **caractérisé en ce que** des réflecteurs (4a) distincts sont associés aux lampes à tige de verre.

5. Feu de signalisation selon la revendication 4, **caractérisé en ce que** l'ensemble des réflecteurs (4a) est réalisé en une pièce sous la forme d'une unité de réflecteur (4).

6. Feu de signalisation selon la revendication 5, **caractérisé en ce que** l'unité de réflecteur (4), l'élément collimateur (6) et le verre de lampe (7) sont assemblés pour former une unité de montage.

7. Feu de signalisation selon la revendication 1, **caractérisé en ce que**, côté aile, l'élément collimateur (6) présente, outre la source lumineuse (1) extérieure, une zone terminale (10) courbée et adaptée à la forme de la vitre de lampe, laquelle est réalisée de manière sensiblement plus longue que les différents gradins et est pourvue de prismes (11) sur sa face intérieure.
